# EUROPEAN PATENT SPECIFICATION

(11) **EP 2 871 209 B1**
(45) Date of publication and mention of the grant of the patent: **12.09.2018**
(21) Application number: 13813103.2
(22) Date of filing: 04.07.2013
(51) Int. Cl.: C08K 9/02, C01F 11/46, C01G 9/00, C08L 63/00, C08L 67/00, C08L 101/00, G02B 5/02, H05K 3/28, B82Y 30/00, C08K 3/30, C09C 1/02, C08J 3/22

(54) **BARIUM SULFATE COMPOSITE PARTICLES, RESIN COMPOSITION CONTAINING SAME, AND PROCESS FOR PRODUCING SAME**
BARIUMSULFATVERBUNDPARTIKEL, HARZZUSAMMENSETZUNG DAMIT UND VERFAHREN ZUR HERSTELLUNG DAVON
PARTICULES COMPOSITES DE SULFATE DE BARYUM, COMPOSITION DE RÉSINE LES COMPRENANT, ET LEUR PROCÉDÉ DE PRODUCTION

(30) Priority: 06.07.2012 JP 2012152990
(43) Date of publication of application: 13.05.2015
(73) Proprietor: Sakai Chemical Industry Co., Ltd., Sakai-shi, Osaka 590-8502 (JP)
(72) Inventor: SHIMIZU, Yusuke, Iwaki-shi Fukushima 971-8183 (JP); MIYAKE, Junichi, Iwaki-shi Fukushima 971-8183 (JP); IZUMIKAWA, Hiroyuki, Iwaki-shi Fukushima 971-8183 (JP); ASADA, Masayuki, Iwaki-shi Fukushima 971-8183 (JP)
(74) Representative: Isarpatent
(86) International application number: PCT/JP2013/068358
(87) International publication number: WO 2014/007325

(56) References cited:
- JP-A- H 108 028
- JP-A- S59 122 554
- JP-A- 2002 296 771
- JP-A- 2004 054 122
- JP-A- 2009 126 970
- JP-A- 2009 209 315
- JP-A- 2009 255 042
- JP-A- 2012 513 365

## Description

### TECHNICAL FIELD

The present disclosure relates to a barium sulfate composite particle, a production method thereof, and a resin composition comprising the barium sulfate composite particle.

### BACKGROUND OF THE DISCLOSURE

Barium sulfate is widely used for various fields as a general-purpose filler. Among them, it is widely used for resin compositions such as an ink, a film, and a sheet which are used for an electronic equipment.

As barium sulfate which is used as a filler for an electronic equipment, a precipitated barium sulfate which is synthesized chemically is widely used. The precipitated barium sulfate synthesized from barium sulfide obtained by reducing roasting a barite may be prepared by a production method which is especially suitable for mass production. This barium sulfate synthesized from the barium sulfide is superior in dispersibility, so it is used especially suitably for resin compositions requiring a high dispersibility such as an ink, a film, and a sheet in addition to a coating. However, the barium sulfate synthesized from barium sulfide contains a sulfur component as an impurity and there is a possibility that a sulfide volatilizes even if it is contained in an ink, or a resin composition according to the condition, so that metal parts such as electrodes of electronic equipment may be deteriorated and corroded to reduce the function, the durability, and the reliability of electronic equipment.

Patent document 1 discloses a deodorant sheet containing a zinc oxide and another inorganic compound, but deterioration and corrosion of metal parts such as electrodes to be used for electronic equipment have not been examined sufficiently.

Patent document 1 discloses in examples that the hydrogen sulfide rejection ratio of the deodorant sheet containing zinc oxide of 40% is almost 90%, and it is insufficient (comparative examples 2 and 4). Zinc oxide is a compound having a catalytic activity, so it is required to restrain an amount of zinc oxide to 1% or below because resins including a polyester resin as a research subject of the inventors may be deteriorated when a large amount of zinc oxide is compounded.

Patent document 2 discloses that fine zinc oxide and an acrylic binder are used to prepare a suspension liquid and the suspension liquid is applied on a polyester fiber surface to remove sulfide components in the surrounding environment. However, the object thereof is deodorizing, the corrosion of silver electrodes to be used in electronic equipment have not been examined sufficiently as well as patent document 1. Further, an amount of zinc oxide to be applied on the fiber is 1.5 weight parts being large, so the resin to be used may be deteriorated as well as patent document 1.

In examples of patent document 2, fine zinc oxides are compounded in a coating as a deodorant component and applied on the fiber surface. However, in the field of resins for electronic equipment, barium sulfate which is generally easily dispersible without a powerful stirring enough to stir a coating is required, and the high dispersibility of a material is desired. When fine zinc oxide like the zinc oxide disclosed in patent document 2 is compounded as is, the fine zinc oxides aggregate to generate defects such as a clogging of a filter to be used in the process.

Patent document 3 discloses a plate-like barium sulfate covered by zinc oxide. The document discloses only a cosmetic comprising them, and does not disclose a resin composition comprising a plate-like barium sulfate covered by zinc oxide.

### PRIOR TECHNICAL DOCUMENTS

### PATENT DOCUMENTS

[Patent Document 1] Japanese Kokai Publication Hei06-099022
[Patent Document 2] Japanese Kokai Publication Hei08-231897
[Patent Document 3] Japanese Kokai Publication Hei10-8028

### SUMMARY OF INVENTION

### PROBLEMS TO BE SOLVED BY THE INVENTION

In view of the situations described above, it is an object of the present disclosure to provide a barium sulfate composite particle which does not deteriorate and corrode metal parts such as electrodes made of silver or copper by a sulfide component volatilized from the barium sulfate and a resin composition comprising the same while maintaining a high dispersibility when a barium sulfate synthesized from barium sulfide which is superior in dispersibility is used as a filler of a resin composition to be used for electronic equipment, and a resin composition comprising the barium sulfate composite particle.

### MEANS FOR SOLVING OBJECT

The inventors have found out that a barium sulfate composite particle having a zinc compound adhered to the surface, a production method thereof, and a resin composition comprising the barium sulfate composite particle. The barium sulfate composite particles of the invention have a diameter of 0.01 to 10 micrometer and the amount of Zn compound is 0.05 to 1 weight % in terms of ZnO relative to the barium sulfate composite particle. The particle of the present invention is defined in claim 1.

### EFFECTS OF THE INVENTION

The barium sulfate composite particle of the present disclosure can prevent the deterioration and corrosion of metal electrodes made of silver or copper caused by sulfide component volatilized from the barium sulfate and has an effects of improving the functions, the durability, and the reliability of electronic equipment, when used as a filler of resin compositions such as a regist ink, a film, and a sheet used for electronic equipment.

### BRIEF DESCRIPTION OF THE DRAWINGS

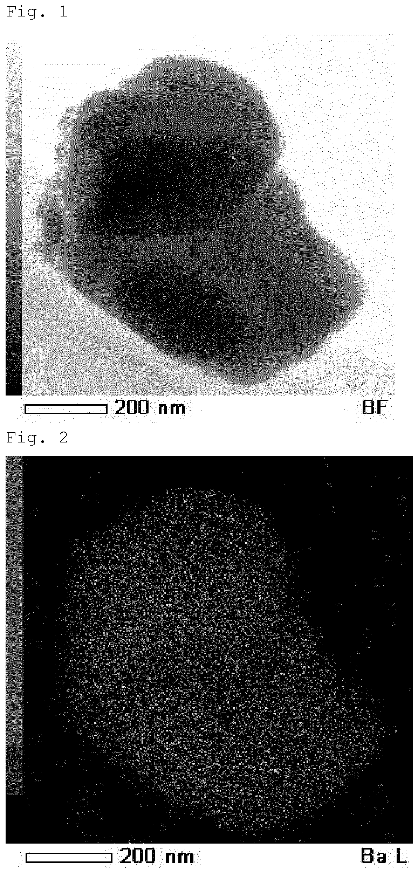

FIG. 1 is a transmission electron microscope photograph of the surface of barium sulfate composite particles obtained in Example 4.
FIG. 2 is an image showing Ba mapping obtained by wavelength dispersive X-ray analysis of transmission electron microscope photograph of the surface of barium sulfate composite particles obtained in Example 4.

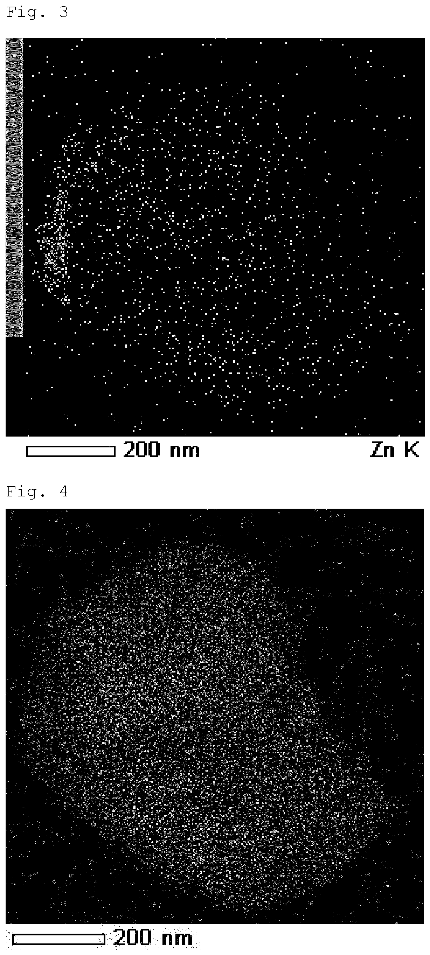

FIG. 3 is an image showing Zn mapping obtained by wavelength dispersive X-ray analysis of transmission electron microscope photograph of the surface of barium sulfate composite particles obtained in Example 4.
FIG. 4 is an image showing Ba and Zn mapping obtained by wavelength dispersive X-ray analysis of transmission electron microscope photograph of the surface of barium sulfate composite particles obtained in Example 4.

### DETAILED DESCRIPTION OF PREFERRED EMBODIMENTS

In the following, the present disclosure is described in detail.

The barium sulfate composite particle of the present disclosure is a composite particle having a zinc compound adhered to the barium sulfate surface, and a resin composition comprising the same is one aspect of the present disclosure.

It has been already known that a compound made from zinc oxide deodorizes hydrogen sulfide smell, but the deterioration and corrosion of metal electrodes of electronic equipment have not been examined sufficiently. High dispersibility is necessary for a pigment used for an ink and a film for electronic equipment, therefore fine materials may sometimes aggregate to reduce the dispersibility and generate defects such as a clogging of a filter in the process when fine zinc oxide is mixed with barium sulfate. The object of the present disclosure is to prevent a sulfide component generated from a barium sulfate being a host material from deteriorating and corroding a metal electrode by depositing a zinc compound on the barium sulfate surface while maintaining the high dispersibility.

The barium sulfate composite particles of the present invention have an average particle diameter of 0.01 to 10 µm. When it is less than 0.01 µm, the particles aggregate strongly to remarkably reduce the dispersibility so that the particles cannot be used for a resin. When it exceeds 10 µm, the particle cannot be used because the advantages of using the particle as a filler of a resin composition are lost, for example the smoothness of the resin surface is reduced. The average particle diameter is more preferably not less than 0.1 µm, and less than 3µm. The average particle diameter is preferably 0.1 to 3µm, because the dispersibility is more improved and the smoothness of the resin surface is more improved. The average particle diameter is more preferably 2.9 µm or less.

The particle diameter of the barium sulfate composite particles is measured by using Microtrac MT-3300 EX II manufactured by NIKKISO CO. LTD. Sodium hexametaphosphate aqueous solution 0.025% is used as a solvent and the dispersion condition is that the internal ultrasonic wave is 40 W and time is 10 minutes.

The barium sulfate particle which is used as a host material of the barium sulfate composite particle of the present disclosure has preferably a specific surface area of 0.5 to 20 m²/g, more preferably 2 to 10 m²/g. The above-mentioned range is preferred because properties suitable as a filler of resin compositions, such as a high dispersibility, can be achieved.

The barium sulfate particle which is used as a host material of the barium sulfate composite particle of the present disclosure is not particularly limited but those made from barium sulfide are preferably used. The barium sulfate particle made from barium sulfide is not particularly limited but may be obtained by a reaction of barium sulfide with soluble sulfates such as ammonium sulfate or sulfuric acid. The barium sulfate used as a host material has a particle diameter of 0.01 to 10 µm. A commercial product may be used. That is, the barium sulfate composite particle of the present disclosure may be a compound obtained by depositing a zinc compound on the surface of a commercial barium sulfate particle without deposited zinc compound on the surface. As the commercial barium sulfate particle, for example, BARIACE B-54 manufactured by Sakai Chemical Industry Co., Ltd. (average particle diameter 0.7 µm, specific surface area 4.9 m²/g), and BARIACE B-55 manufactured by Sakai Chemical Industry Co., Ltd. (average particle diameter 0.6 µm, specific surface area 5.4 m²/g) are included. The particle diameter of the barium sulfate used as the host material is measured by following the same manner as that of the particle diameter of the barium sulfate composite particle.

The particle shape of the barium sulfate particle used as the host material is not particularly limited but spherical shape, and plate-like shape are preferred.

A reaction for obtaining the barium sulfate used as the host material may be a continuous reaction or a batch reaction. In both reaction types, a barium sulfide with a soluble sulfate such as sodium sulfate and ammonium sulfate or sulfuric acid are supplied into a reaction vessel equipped with a stirring to proceed a reaction.

The barium sulfate composite particle of the present disclosure is a particle having a zinc compound adhered to the surface. It is preferred that the zinc compound is deposited on the barium sulfate surface by adding zinc salt aqueous solution to a slurry containing a barium sulfate.

The zinc compound generated by adding and depositing a water-soluble zinc salt is not particularly limited but zinc oxide, zinc hydroxide, and zinc carbonate may be cited. Two or more kinds of the compounds may be a mixed state.

A method for depositing a zinc compound on the surface of the barium sulfate particle is preferably a method comprising adding an aqueous solution of zinc salt to a slurry containing barium sulfate and adjusting the pH of the slurry within 6.0 to 12.0 to deposit the zinc compound on the surface of the barium sulfate particle. The method for producing the barium sulfate composite particle is one aspect of the present disclosure.

When the pH falls outside the range of 6.0 to 12.0 after only the aqueous solution of zinc salt is added, the pH may be adjusted by adding an acid or an alkali solution. Even if the pH falls in the range of 6.0 to 12.0 after only the aqueous solution of zinc salt is added, the pH may be adjusted by adding an acid or an alkali compound to optimize the deposition of the zinc compound. The acid or alkali solution may be added before or after the aqueous solution of zinc salt is added to the slurry of barium sulfate. The aqueous solution of zinc salt and the acid or alkali solution may be added to the slurry of barium sulfate at the same time. The aqueous solution of the zinc salt is not particularly limited but includes, for example, aqueous solutions containing zinc sulfate, zinc nitrate, zinc chloride, zinc acetate, and aqueous solutions containing zincic acid anion of hydroxyl complex and zincic acid anion of ammine complex.

The pH of the slurry is preferably within the above-mentioned pH condition during the reaction process. The pH changes according to the reaction if the reaction is performed. However, it is not necessary needed that the pH is within the above-mentioned range in the whole steps of the reaction. The pH should be within the range for a definite period of time while the reaction proceeds.

The pH of the slurry before the addition of zinc salt is not particularly limited but preferably 6 or more, more preferably 8 or more. The slurry with the pH of the above-mentioned range is preferred because the deterioration and the corrosion of metal parts such as electrodes, which are made from silver or copper, of electronic equipment caused by sulfide component volatilized from the barium sulfate can be prevented.

The pH of the slurry in the middle of adding the zinc salt is not particularly limited but the pH is preferably 6 or more throughout the addition, more preferably 8 or more throughout the addition. The pH is changed by adding the zinc salt, the acid or alkali solution and the zinc salt may be added at the same time to adjust the pH within the range.

The pH of the slurry after the addition of zinc salt is preferably 6 to 12, more preferably 8 to 11. When the pH falls outside of the range after the addition of zinc salt, the pH may be adjusted by adding the acid or the alkali solution. Zinc is amphoteric element and the solubility becomes lager under the condition that the pH is 6 or less and 12 or more, so it is preferred to adjust the pH within the range to deposit the zinc compound efficiently.

The slurry concentration of the barium sulfate is not particularly limited but it is not preferred that the slurry concentration is too high because the slurry viscosity becomes high so that the zinc salt solution to be added may not be diffused rapidly. It is not preferred that the slurry concentration is too low because the efficiency of industrial production is inferior. The slurry concentration of barium sulfate is preferably 10 to 400 g/L, more preferably 100 to 200 g/L. The concentration of zinc compound to be added is not particularly limited as long as the zinc compound is dissolved in water completely, but 50 to 1000 g/L is generally preferred, and 100 to 500 g/L is more preferred.

The acid solution is not particularly limited but may include aqueous solutions of sulfuric acid, nitric acid, hydrochloric acid, acetic acid, and so on. The alkali solution is not particularly limited but may include aqueous solutions of sodium hydroxide, potassium hydroxide, and ammonia water. Zinc sulfate is preferred as the zinc compound because unnecessary salt doesn't increase considering that the barium sulfate is made from barium sulfide and sulfate or sulfuric acid. When zinc sulfate is selected as the zinc compound, it is preferred that pH is adjusted by using sodium hydroxide because sodium hydroxide is used widely in industrial uses, relatively inexpensive and readily accessible.

After the completion of the reaction, the obtained slurry is filtered, water washed, and dried. After then, the slurry is pulverized by a pulverizer according to need to obtain barium sulfate composite particle having a zinc compound deposited on the surface.

According to the present invention the amount of zinc compound on the surface of barium sulfate composite particle is 0.05 to 1 weight % in terms of ZnO relative to weight of the barium sulfate composite particle of the present disclosure. When the amount is less than 0.05 weight %, a sulfide component volatilized from the barium sulfate cannot be captured and the deterioration and the corrosion of the electrodes of the electronic equipment cannot be prevented sufficiently. When the amount is more than 1 weight %, it is not preferred because the amount of barium sulfate to be added must be decreased to prevent the zinc compound to deteriorate a resin when added in the resin. The upper limit is preferably 0.6 weight %, and the lower limit is preferably 0.1 weight %.

In the patent documents 1 to 3, a compound containing zinc oxide in higher ratio, when comparing the ratio of barium sulfate and zinc oxide, is disclosed. In the present disclosure, it is preferred that zinc compound is contained at lower ratio than that of conventional composite powder. For example, patent document 1 discloses that the mixing ratio of zinc oxide and other inorganic compound is preferably 30:70 to 70:30 in weight. Patent document 2 discloses that the mixing weight ratio of zinc oxide and zirconium as inorganic compounds is 5:95 to 95:5. Patent document 3 discloses the mixing ratio of zinc oxide to be added to the plate-like barium sulfate is 20 to 50 weight % in an example and this ratio of zinc compound is higher than the present disclosure.

In the present disclosure, when the amount of zinc compound is too much, the dispersibility in a resin is decreased so that the mixed state with the resin may become non-uniform and the zinc compound may deteriorate the resin. This view point does not disclosed in patent documents 1 to 3.

The barium sulfate composite particle of the present disclosure may be treated by general treatments using a pigment to be mixed in a resin, such as an amine treatment, a silicone treatment, an alcohol treatment, and so on. The amine to be used for the treatment is not particularly limited but may include diethanol amine and triethanol amine. The silicone treatment is not particularly limited but monomethyl polysiloxane and dimethyl polysiloxane may be used. The alcohol treatment is not particularly limited but trimethylolpropane, ethylene glycol and glycerol may be used. These treatments can increase the affinity with a resin and the obtained barium sulfate composite particle may be used suitably as a resin additive for an ink, a film, and a sheet.

The barium sulfate composite particle of the present disclosure may be used as an ingredient of resin compositions such as a resist ink. The resin composition is one aspect of the present disclosure. The barium sulfate composite particle of the present disclosure acts as an extender when it is used for such purpose.

The resin composition of the present disclosure may be one which is used for electronic equipments such as an electronic substrate, a sheet, and a film. Among them, the composition is used for a liquid crystal television containing LED as a light source which has been widely used recently. Especially, it is suitably used in a resin composition for a reflection film of backlight unit. When it is used in the reflection film of backlight unit, the light may be used effectively by reflecting the light emanating from the backlight, and it may cause an excellent effect in that it reduce the deterioration of metal parts such as electrodes which are used for backlight and electronic equipment thereof.

When the barium sulfate composite particle of the present disclosure is used in the resist ink, it may cause an excellent effect in that it protect the electronic circuit, and that it reduce the deterioration of the metal parts such as electrodes which are used for the electronic circuit and electronic equipment thereof.

A resin to be added in the resin composition is not particularly limited if the resin is a resin which is used for various resin compositions such as a coating, an ink, a film, and a sheet. For example, the resin may include epoxy resins used for a solder resist of printed wiring boards, and polyester resins and fluorine resins used for resin moldings such as a film and a sheet. As the polyester resin, polyethylene terephthalate resin (PET resin) is especially preferred. Among them, resins which may be used for solder resist and reflection board of backlight unit in liquid crystal television. The solder resist preferably contains the barium sulfate composite particle of the present disclosure of 10 to 50 weight % as a filler. The reflection board of backlight unit in liquid crystal television preferably contains the barium sulfate composite particle of the present disclosure of 10 to 40 weight % as a filler.

Hereinafter, the present disclosure will be explained with reference to examples. However, the present disclosure is not limited to these examples.

### (Example 1)

Barium sulfate "BARIACE B-55" 500 g was put into a beaker with an inner volume of 3L and water was added to 2.5 L. Next, the solution was re-pulped by a stirrer at 40°C for 10 minutes and 3% NaOH aqueous solution 12.5 mL was added. Zinc sulfate aqueous solution of 148 g/L, 6.5 mL was dropped into the slurry at 1 mL/min, and the slurry was matured for 15 minutes. The pH of the slurry was 9.1 at this time. After the mature, the slurry was filtered by 5C filter paper, and after the filtration, the slurry was washed with ion-exchanged water and water washing was continued until the electric conductivity of the filtrate become 150 µS/cm or less. After water washing, the reaction product was put and dried in a box-shape drier at 105°C for 12 hours. The dried product was pulverized by using jet mill SJ-500 manufactured by Nisshin Engineering Inc. at the pulverization pressure of 0.7 MPa and at the pulverization pace of 20 g/min to obtain barium sulfate composite particles.

### (Example 2)

Barium sulfate composite particles were obtained by following the same procedure as that of Example 1 except that the amount of 3% NaOH aqueous solution to be added was changed to 19.2 mL and the amount of the zinc sulfate aqueous solution of 148 g/L was changed to 9.8 mL. The pH of the slurry before the filtration was 9.0.

### (Example 3)

Barium sulfate composite particles were obtained by following the same procedure as that of Example 1 except that the amount of 3% NaOH aqueous solution to be added was changed to 38.4 mL and the amount of the zinc sulfate aqueous solution of 148 g/L was changed to 19.6 mL. The pH of the slurry before the filtration was 9.1.

### (Example 4)

Barium sulfate composite particles were obtained by following the same procedure as that of Example 1 except that the amount of 3% NaOH aqueous solution to be added was changed to 64.3 mL and the amount of the zinc sulfate aqueous solution of 148 g/L was changed to 32.6 mL. The pH of the slurry before the filtration was 9.1.

### (Example 5)

Barium sulfate "BARIACE B-54" 375 g was put into a beaker with an inner volume of 3L and water was added to 2.5 L. Next, the solution was re-pulped by a stirrer at 40°C for 10 minutes and 3% NaOH aqueous solution was added to adjust the pH to 10.0. Then, 31 mL of zinc sulfate aqueous solution with a concentration of 122 g/L was added continuously at a rate of 2 mL/min. and simultaneously 3% NaOH aqueous solution was added continuously so that the pH of the slurry become 9.0±0.5. After the completion of dropping, the slurry was matured for 15 minutes.

Then, the slurry was filtered by 5C filter paper, and after the filtration, the slurry was washed with ion-exchanged water until the electric conductivity of the filtrate become 150 µS/cm or less. After water washing, the reaction product was put and dried in a box-shape drier at 105°C for 12 hours. The dried product was pulverized by using jet mill SJ-500 manufactured by Nisshin Engineering Inc. at the pulverization pressure of 0.7 MPa and at the pulverization pace of 20 g/min to obtain barium sulfate composite particles.

### (Example 6)

Barium sulfate "BARIACE B-54" 375 g was put into a beaker with an inner volume of 3L and water was added to 2.5 L. Next, the solution was re-pulped by a stirrer at 40°C for 10 minutes. After the repulping, 3% NaOH aqueous solution 49.9 mL was added and zinc sulfate aqueous solution of 122 g/L 31 mL was added at 2 mL/min. After the dropping, the slurry was matured for 15 minutes and filtered by 5C filter paper. After the filtration, the slurry was washed with ion-exchanged water until the electric conductivity of the filtrate become 150 µS/cm or less. After water washing, the reaction product was put and dried in a box-shape drier at 105°C for 12 hours. The dried product was pulverized by using jet mill SJ-500 manufactured by Nisshin Engineering Inc. at the pulverization pressure of 0.7 MPa and at the pulverization pace of 20 g/min to obtain barium sulfate composite particles.

### (Example 7)

Barium sulfate "BARIACE B-55" 500 g was put into a beaker with an inner volume of 3L and water was added to 2.5 L. Next, the solution was re-pulped by a stirrer at 40°C for 10 minutes and 3% NaOH aqueous solution 12.5 mL was added. Zinc sulfate aqueous solution of 148 g/L, 6.5 mL was dropped into the slurry at 1 mL/min, and the slurry was matured for 15 minutes. The pH of the slurry was 9.1 at this time. After the mature, the slurry was filtered by 5C filter paper, and after the filtration, the slurry was washed with ion-exchanged water and water washing was continued until the electric conductivity of the filtrate become 150 µS/cm or less. After water washing, the reaction product was put and dried in a box-shape drier at 105°C for 12 hours. Trimethylolpropane 50 weight % aqueous solution 2 g was added to the dried product and mixed well, and further the mixture was put and dried in a box-shape drier at 105°C for 12 hours. The dried product was pulverized by using jet mill SJ-500 manufactured by Nisshin Engineering Inc. at the pulverization pressure of 0.7 MPa and at the pulverization pace of 20 g/min to obtain barium sulfate composite particles.

### (Comparative example 1)

Barium sulfate "BARIACE B-55" manufactured by Sakai chemical was evaluated about the following factors as the particles of comparative example 1.

### (Comparative example 2)

Barium sulfate "BARIACE B-54" manufactured by Sakai chemical was evaluated about the following factors as the particles of comparative example 2.

The particles obtained in examples 1 to 7 and comparative examples 1 to 2 were evaluated about the following factors. The results were shown in table 1.

### (Silver paste discoloration test)

Each sample 3 g obtained in examples 1 to 7 and comparative examples 1 to 2 were put in a glass sample bottle with an inner volume of 100 mL and a lid was closed to seal the bottle. The sample bottle was put in thermostatic and humidistatic container in which the condition was stabilized at 85 °C × 85 RH% in advance. After confirming that the temperature and the humidity inside the thermostatic and humidistatic container become constant, a slide glass to which the silver paste had been applied (DOTITE D550 manufactured by Fujikurakasei Co., Ltd.) was put in a sample bottle under the atmosphere of the thermostatic and humidistatic container and the lid was closed to seal. After 72 hours, a slide glass was taken out from the sample bottle, and the discoloration degree of the silver paste was confirmed visually. The discoloration of only the silver paste was evaluated as a blank. It was appreciated as ○ when the discoloration degree is equal to the blank. It was appreciated as Δ when the discoloration degree was slightly inferior to the blank. It was appreciated as × when the discoloration degree was inferior to the blank. The results were shown in table 1. From the results in table 1, it is clear that the barium sulfate composite particle of the present disclosure has an effect of prevention the deterioration and discoloration of the silver paste.

### (Zn content)

After 10 % hydrochloric acid 100 ml was added to sample about 1 g which weighed precisely, the mixture was stirred for 30 minutes. After stirring, the mixture was filtered by 5C filter paper and the filtrate 5 ml was put in a 100 ml measuring flask. Next, the filtrate was diluted with distilled water and the quantity of Zn in the filtrate was determined by ICP. All the reagents were special grade reagents. As the ICP, SPS3500 manufactured by Hitachi High-Tech Science Corporation was used. Zn content was determined in terms of oxide (ZnO) weight %.

### (TEM observation)

Zinc compound deposited on the surface of barium sulfate composite particles of example 4 was observed by using a transmission electron microscope JEM-1200F (manufactured by JEOL Ltd.) . The results were shown in drawings 1 to 4. It is clear that a zinc-based compound is deposited on the particle surface of the barium sulfate.

**[Table 1]**

| Sample | Example 1 | Example 2 | Example 3 | Example 4 | Example 5 | Example 6 | Example 7 | Comparative example 1 | Comparative example 2 |
|---|---|---|---|---|---|---|---|---|---|
| Zn content (weight %) in terms of ZnO | 0.11 | 0.14 | 0.29 | 0.42 | 0.58 | 0.51 | 0.11 | - | - |
| Silver paste discoloration test | ○ | ○ | ○ | ○ | ○ | ○ | ○ | × | × |

### (Preparation of PET master batch)

### (Example 8)

A resin composition containing barium sulfate composite particles of 30 weight % was produced by using the barium sulfate composite particle obtained in example 2. PET resin (TR-8550T manufactured by Teijin Chemicals Ltd. (PET)) 350 g pulverized beforehand by an atomizer and the barium sulfate composite particles obtained in example 2 150 g were put in a glass mayonnaise bottle and mixed for 30 minutes by a paint conditioner manufactured by Red Devil. Then, the lid of the mayonnaise bottle was taken off and dried in a drier at 110 °C for 12 hours to obtain a premix. As the apparatus for kneading the premix, LABO PLASTMILL 4C 150 manufactured by TOYO ENGINEERING WORKS, LTD. equipped with a biaxial extruder 2D25SH manufactured by TOYO ENGINEERING WORKS, LTD. was used. The premix was charged into the kneading machine at 20 g/min. The rotation number of the screw was 80 rpm, and all the preset temperature in kneading units were 260 °C. The kneaded resin was took out into a water tank and cut into appropriately sized pieces with scissors to obtain a master batch.

### (Comparative example 3)

Master batch was prepared by following the same procedure as that of Example 8 except that sample of comparative example 1 was used.

### (Comparative example 4)

Master batch was prepared by following the same procedure as that of Example 8 except that sample of comparative example 2 was used.

### (Comparative example 5)

Master batch was obtained by following the same procedure as that of Example 8 except that a sample which obtained by adding fine zinc oxide (manufactured by Sakai Chemical Industry Co., Ltd., ultrafine particles zinc oxide NANOFINE W-1) 0.15 weigh % to barium sulfate "BARIACE B-55" manufactured by Sakai Chemical Industry Co., Ltd., and putting the mixture into a plastic bag followed by shaking well with hands to mix, was used.

### (Silver paste discoloration test of master batch)

Each master batch 10 g obtained in example 8 and comparative examples 3 to 5 were put in a glass sample bottle with an inner volume of 100 mL and a lid was closed to seal the bottle. The sample bottle was put in thermostatic and humidistatic container in which the condition was stabilized at 85 °C × 85 RH% in advance. After confirming that the temperature and the humidity inside the thermostatic and humidistatic container become constant, a slide glass to which the silver paste had been applied (DOTITE D550 manufactured by Fujikurakasei Co., Ltd.) was put in a sample bottle under the atmosphere of the thermostatic and humidistatic container and the lid was closed to seal. After 72 hours, a slide glass was taken out from the sample bottle, and the discoloration degree of the silver paste was confirmed visually. The discoloration of only the silver paste was evaluated as a blank. It was appreciated as ○ when the discoloration degree is equal to the blank. It was appreciated as Δ when the discoloration degree was slightly inferior to the blank. It was appreciated as × when the discoloration degree was inferior to the blank. The results were shown in table 2.

### (Dispersibility evaluation of master batch)

The obtained master batch 10 g was put on a flat magnetic plate where an aluminum foil had been laid and spread into a thin layer while being heated by a hot plate. After that, it was left until cooled to prepare a thin sheet. The prepared sheet was observed through a microscope and the size of coarse particles in the resin was measured. It was appreciated as ○ when the size of all the measured coarse particles was 60 µm or less. It was appreciated as Δ when even one coarse particle having the particle diameter of 60 to 100 µm was found. It was appreciated as × when even one particle having the particle diameter of 100 µm or more was found.

The evaluation results were shown in table 2 together with the results of discoloration test of silver paste. From the results of table 2, the resin of the present disclosure has an effect of inhibiting the deterioration and discoloration of silver paste. Further, it is clear that the barium sulfate composite particle of the present disclosure is superior in the dispersibility in the resin. Like the barium sulfate composite particle of the present disclosure, a raw material which is superior in the dispersibility in the resin and does not cause the discoloration of silver paste can be used especially suitably as a filler incorporated in a resin composition used for electronic equipment. On the other hand, the sample of comparative example 5 obtained by mixing fine zinc oxide as powder inhibited the discoloration of silver paste by fine zinc oxide effect, but it was confirmed that large sized agglomerate was generated in the resin because of high aggregability derived from fine size. Therefore, it is found that, when fine zinc oxide is just added to barium sulfate, the discoloration of silver paste can be inhibited but the industrial mass production is impossible because of poor dispersibility and good-quality resin cannot be obtained.

**[Table 2]**

| Sample | Example 8 | Comparative example 3 | Comparative example 4 | Comparative example 5 |
|---|---|---|---|---|
| Evaluation of dispersibility | ○ | ○ | ○ | × |
| Silver paste discloloration test | ○ | × | × | ○ |

### INDUSTRIAL APPLICABILITY

The barium sulfate composite particle of the present disclosure can be used suitably as a component for resin compositions such as various inks, films, and sheets.

## Claims

1. Barium sulfate composite particles having a zinc compound adhered to the particle surface and having an average particle diameter of 0.01 to 10 µm, wherein a deposited amount of zinc compound is 0.05 to 1.0 weight% in terms of ZnO relative to the barium sulfate composite particle.

2. The barium sulfate composite particle according to claim 1 obtained by a production method comprising a step of depositing a zinc compound on the barium sulfate surface by adding a water-soluble zinc salt to a slurry of barium sulfate (1).

3. The barium sulfate composite particle according to claim 2, wherein a depositing is carried out at pH of 6.0 to 12.0 in the step (1) of depositing the zinc compound on the barium sulfate surface.

4. The barium sulfate composite particle according to any one of claims 1 to 3, wherein the barium sulfate is made from barium sulfide.

5. The barium sulfate composite particle according to any one of claims 1 to 4, additionally comprises a coating layer of at least one of amine, silicone, and alcohol.

6. A method for producing the barium sulfate composite particle according to any one of claims 1 to 5, comprising a step of depositing a zinc compound on the barium sulfate surface by adding a water-soluble zinc salt to a slurry of barium sulfate (1) at pH of 6.0 to 12.0.

7. A resin composition comprising the barium sulfate composite particle according to any one of claims 1 to 5.

8. The resin composition according to claim 7, wherein the resin is a polyester.

9. The resin composition according to claim 7, wherein the resin is an epoxy resin.

10. A resist ink comprising the composite particle according to any one of claims 1 to 5.

11. A reflection film obtained by molding a resin composition comprising the composite particle according to any one of claims 1 to 5 in a film shape.

## Patentansprüche

1. Bariumsulfat-Verbundteilchen mit einer Zinkverbindung, die an die Teilchenoberfläche anhaftet und die einen mittleren Teilchendurchmesser von 0,01 bis 10 µm aufweist, wobei die abgelagerte Menge der Zinkverbindung 0,05 bis 1,0 Gewichts%, ausgedrückt als ZnO in Bezug auf das Bariumsulfat-Verbundteilchen, beträgt.

2. Bariumsulfat-Verbundteilchen nach Anspruch 1,
erhalten durch ein Herstellungsverfahren, umfassend einen Schritt der Ablagerung einer Zinkverbindung auf der Bariumsulfat-Oberfläche durch Zugabe eines wasserlöslichen Zinksalzes zu einer Aufschlämmung von Bariumsulfat (1).

3. Bariumsulfat-Verbundteilchen nach Anspruch 2,
wobei die Ablagerung bei einem pH-Wert von 6,0 bis 12,0 im Schritt (1) der Ablagerung der Zinkverbindung auf der Bariumsulfat-Oberfläche durchgeführt wird.

4. Bariumsulfat-Verbundteilchen nach einem der Ansprüche 1 bis 3,
wobei das Bariumsulfat aus Bariumsulfid hergestellt ist.

5. Bariumsulfat-Verbundteilchen nach einem der Ansprüche 1 bis 4,
welches zusätzlich eine Beschichtungsschicht aus zumindest einem von Amin, Silikon, und Alkohol umfasst.

6. Verfahren zur Herstellung des Bariumsulfat-Verbundteilchens nach einem der Ansprüche 1 bis 5,
umfassend einen Schritt der Ablagerung einer Zinkverbindung auf der Bariumsulfat-Oberfläche durch Zugabe eines wasserlöslichen Zinksalzes zu einer Aufschlämmung an Bariumsulfat (1) bei einem pH-Wert von 6,0 bis 12,0.

7. Harzzusammensetzung,
umfassend das Bariumsulfat-Verbundteilchen nach irgendeinem der Ansprüche 1 bis 5.

8. Harzzusammensetzung nach Anspruch 7,
wobei das Harz ein Polyester ist.

9. Harzzusammensetzung nach Anspruch 7,
wobei das Harz ein Epoxyharz ist.

10. Abdeckmittel, umfassend das Verbundteilchen nach irgendeinem der Ansprüche 1 bis 5.

11. Reflektionsfilm, erhalten durch Formen einer Harzzusammensetzung,
umfassend das Verbundteilchen nach irgendeinem der Ansprüche 1 bis 5 zu einer filmförmigen Gestaltung.

## Revendications

1. Particules composites de sulfate de baryum comportant un composé de zinc adhérant à la surface des particules, et présentant un diamètre moyen de particules de 0,01 à 10 µm, dans lesquelles une quantité déposée de composé de zinc est de 0,05 à 1,0 % en poids, en termes de ZnO par rapport à la particule composite de sulfate de baryum.

2. Particule composite de sulfate de baryum selon la revendication 1, obtenue au moyen d'un procédé de production comprenant une étape consistant à déposer un composé de zinc à la surface du sulfate de baryum en ajoutant un sel de zinc soluble dans l'eau à une pâte de sulfate de baryum (1).

3. Particule composite de sulfate de baryum selon la revendication 2, dans laquelle un dépôt est réalisé à un pH de 6,0 à 12,0 à l'étape (1) de dépôt du composé de zinc à la surface du sulfate de baryum.

4. Particule composite de sulfate de baryum selon l'une quelconque des revendications 1 à 3, dans laquelle le sulfate de baryum est produit à partir de sulfure de baryum.

5. Particule composite de sulfate de baryum selon l'une quelconque des revendications 1 à 4, comprenant en outre une couche de revêtement d'amine et/ou de silicone et/ou d'alcool.

6. Procédé pour produire la particule composite de sulfate de baryum selon l'une quelconque des revendications 1 à 5, comprenant une étape consistant à déposer un composé de zinc à la surface du sulfate de baryum, en ajoutant un sel de zinc soluble dans l'eau à une pâte de sulfate de baryum (1) à un pH de 6,0 à 12,0.

7. Composition de résine comprenant la particule composite de sulfate de baryum selon l'une quelconque des revendications 1 à 5.

8. Composition de résine selon la revendication 7, dans laquelle la résine est un polyester.

9. Composition de résine selon la revendication 7, dans laquelle la résine est une résine époxydique.

10. Encre de réserve comprenant la particule composite selon l'une quelconque des revendications 1 à 5.

11. Film réfléchissant obtenu par moulage d'une composition de résine comprenant la particule composite selon l'une quelconque des revendications 1 à 5 sous forme de film.
